# DEMANDE DE BREVET EUROPEEN

(11) **EP 0 537 093 A1**
(43) Date de publication de la demande: **14.04.1993**
(21) Numéro de dépôt: 92420358.1
(22) Date de dépôt: 09.10.1992
(51) Int. Cl.: B60S 1/34

(54) **Structure-support pour essuie-glaces pour véhicules**

(30) Priorité: 11.10.1991 FR 9112933
(71) Demandeur: Ortillez, Claude, F-25140 Charquemont (FR)
(72) Inventeur: Ortillez, Claude, F-25140 Charquemont (FR)
(74) Mandataire: Dupuis, François

(57) **Abrégé**

La structure support comprend un profilé (2) de grande longueur susceptible de maintenir, guider et coopérer avec une bande caoutchouc (3) de grande longueur, ledit profilé présentant un évidement intérieur (2.1) sur toute sa longueur, ledit profilé et ladite bande étant solidarisés par tout moyen approprié sur au moins une de leur extrémité, ledit ensemble obtenu étant fixé par au moins un élément de maintien et d'accrochage (5) susceptible de s'engager partiellement dans le profilé et se fixer dans l'ossature support de l'essuie-glace, ledit élément de maintien présentant une lèvre médiane (5.4) ayant une capacité de flexibilité et susceptible de s'engager à force dans ledit évidement intérieur (2.1) du profilé en constituant une zone de retenue par rapport aux faces en regard dudit évidement, et autoriser ainsi une fixation dudit élément de maintien sur ledit profilé.

## Description

L'invention se rattache au secteur technique des essuie-glaces.

On rappelle que, selon l'art antérieur, les essuie-glaces sont constitués d'un balai en caoutchouc généralement incurvé en raison du galbe du pare-brise, ledit balai étant monté à position fixe sur une ossature support solidarisée aux bras articulés et pivotantes susceptibles de balayer le plan de pare-brise grâce à une commande motorisée appropriée.

L'usage et le fonctionnement des essuie-glaces entraînent régulièrement la dégradation des balais en caoutchouc, de sorte qu'il est nécessaire de procéder à leur changement. A défaut, l'état de nettoyage des pare-brise n'est plus assuré et peut être source à terme de gêne pour les conducteurs pouvant entraîner des accidents.

Actuellement, le changement des balais d'essuie-glace nécessite automatiquement l'enlèvement de l'ensemble de la partie balai associée à sa structure support. On désolidarise cet ensemble des crochets associés aux bras articulés précités.

Cette opération est onéreuse car les structures supports ne sont pas forcément abîmées et, d'autre part, l'opération de changement n'est pas toujours pratique à réaliser.

Pour remédier à ces inconvénients, il a été proposé dans le Brevet US 4.156.951 un dispositif dans lequel la bande de caoutchouc constituant le balai d'essuie-glace est engagée dans un profilé avec l'adjonction d'un système de fermeture comprenant en particulier des languettes d'accrochage sur le profilé.

La mise en oeuvre de ce dispositif présente certains inconvénients dans l'agencement en particulier de la languette d'accrochage exigeant en particulier une manipulation très peu aisée et des coûts de fabrication élevés.

Le but recherché selon l'invention était de remédier à ces inconvénients en proposant une solution économique facile à mettre en oeuvre pour permettre le changement des balais d'essuie-glaces.

Un autre but recherché était de concevoir une nouvelle structure de montage des essuie-glaces pouvant être standardisée et adaptée aux différentes dimensions très variables des essuie-glaces en fonction des types d'automobiles existants.

Un autre but était de concevoir une conception des balais d'essuie-glaces par une fabrication particulière permettant immédiatement une adaptation des dimensions aux longueurs recherchées cas par cas en fonction des caractéristiques des véhicules automobiles.

Selon une première caractéristique, la structure support pour essuie-glaces pour véhicules, est remarquable en ce qu'elle comprend un profilé de grande longueur susceptible de maintenir, guider et coopérer avec une bande caoutchouc de grande longueur, ledit profilé présentant un évidement intérieur sur toute sa longueur, ledit profilé et ladite bande étant solidarisés par tout moyen approprié sur au moins une de leur extrémité, ledit ensemble obtenu étant fixé par au moins un élément de maintien et d'accrochage susceptible de s'engager partiellement dans le profilé et se fixer dans l'ossature support de l'essuie-glace, ledit élément de maintien présentant une lèvre médiane ayant une capacité de flexibilité et susceptible de s'engager à force dans ledit évidement intérieur du profilé en constituant une zone de retenue par rapport aux faces en regard dudit évidement, et autoriser ainsi une fixation dudit élément de maintien sur ledit profilé.

Selon une autre caractéristique, le profilé et la bande de caoutchouc sont réalisés monobloc par co-extrusion, les parties en regard du profilé de la bande étant solidarisées entre elles par soudure.

Ces caractéristiques et d'autres encore ressortiront bien de la suite de la description.

Pour fixer l'objet de l'invention illustré non limitativement aux figures des dessins où :

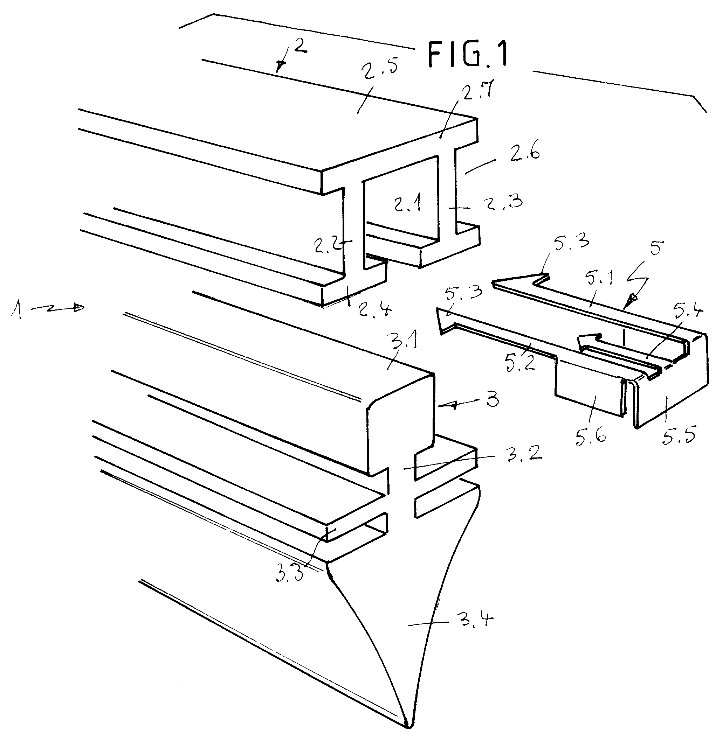

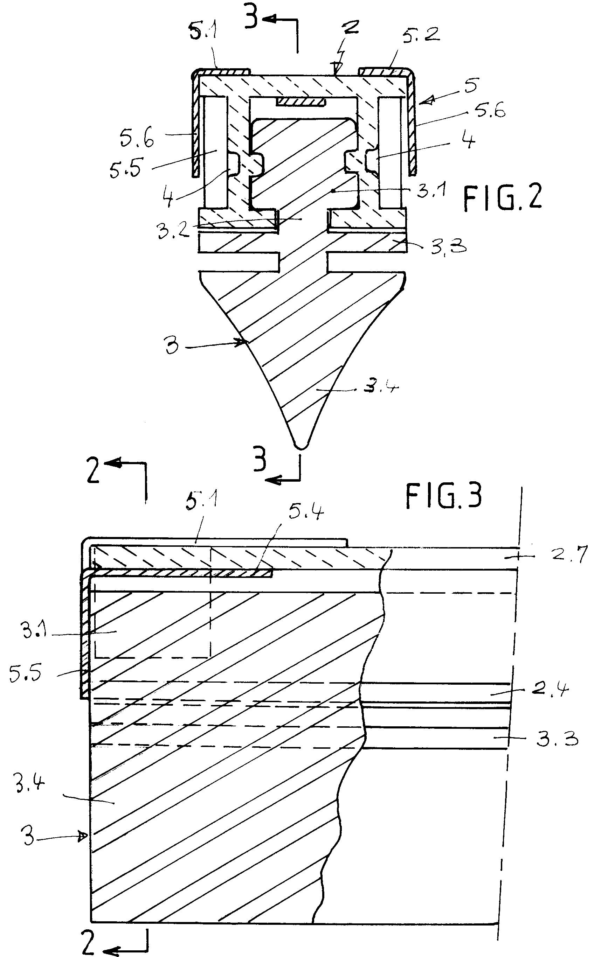

La figure 1 est une vue en perspective avant montage de la structure support de balai pour essuie-glace.

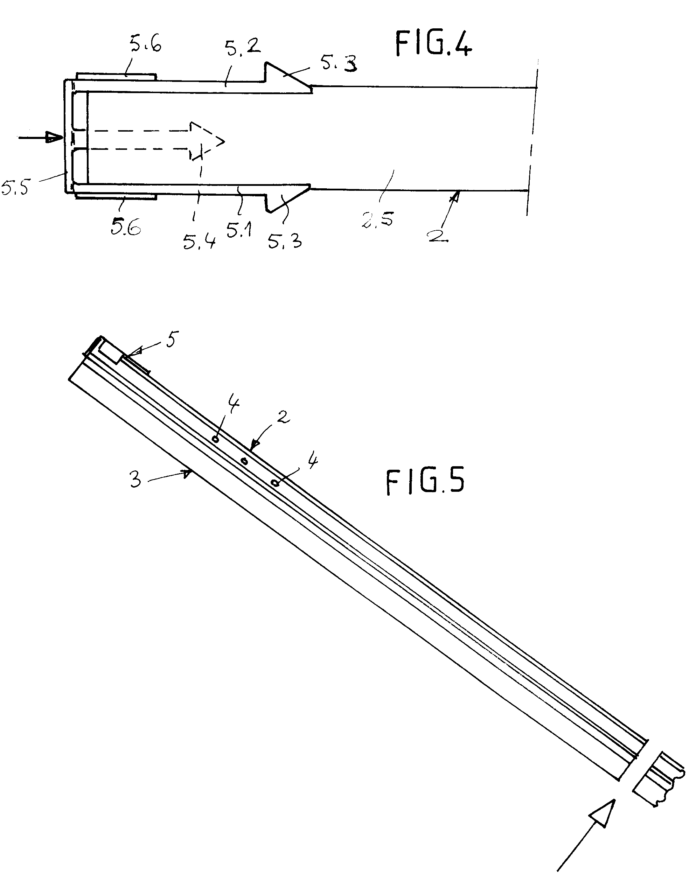

La figure 2 est une vue de face en coupe selon la ligne B-B de la figure 4 de la structure support de balai pour essuie-glace après montage.

La figure 3 est une vue en plan de la structure support d'essuie-glace.

La figure 4 est une vue en coupe selon la ligne A-A de la figure 2.

La figure 5 est une vue d'ensemble de la structure support pour essuie-glace montée sur l'ossature de l'essuie-glace.

La figure 6 est une vue d'une variante de réalisation d'un ensemble monobloc du profilé et de la bande de caoutchouc, en coupe selon la ligne B-B de la figure 7.

La figure 7 est une vue en coupe selon la ligne C-C de la figure 6.

Afin de rendre plus concret l'objet de l'invention, on le décrit maintenant d'une manière non limitative aux figures du dessin.

L'invention vise une structure support pour essuie-glace référencée dans son ensemble par (1). Elle comprend un profilé (2) réalisé en matériau plastique ou autre agencé pour recevoir, maintenir et guider une bande en caoutchouc (3) susceptible de constituer le balai de l'essuie-glace. Le profilé (2) de grande longueur présente d'un côté une forme en U formant évidement intérieur (2.1) avec deux ailes de part et d'autre (2.2 - 2.3) entre lesquelles est engagée à coulissement et positionnement la partie supérieure formant bourrelet (3.1) de la bande (3).

Cette dernière comprend, à partir de son âme centrale (3.2), deux ailettes (3.3) longitudinales disposées en opposition par rapport à l'âme et susceptibles de venir s'appliquer contre les rebords (2.4) formant chants établis aux extrémités des ailes (2.2 - 2.3) du profilé précité. La bande de caoutchouc se prolonge à sa partie inférieure avec une forme triangulée évasée (3.4) susceptible de venir s'appliquer sur le verre du pare-brise.

Pour assurer la liaison de la bande (3) sur le profilé (2), il peut être prévu au moins d'un côté de leur assemblage, un, deux ou trois points (4) ou plus de liaison par sertissage par exemple.

Selon une autre caractéristique, la partie supérieure (2.5) et extérieure du support (2) est agencée avec deux évidements longitudinaux (2.6), ladite partie supérieure étant susceptible de permettre l'engagement et la fixation d'éléments de maintien et d'accrochage (5) pouvant coopérer avec les crochets associés à la structure support de l'essuie-glace ou à ses crochets directement. L'élément de maintien et d'accrochage (5) présente ainsi deux lèvres (5.1 - 5.2) parallèles disposées en bordure d'extrémité de l'élément de maintien et formant crochets à leur extrémité (5.3) et flexibles pour s'engager dans l'ossature support de l'essuie-glace. Une lèvre intermédiaire (5.4) de petite longueur présentant en bout une section triangulée (5.7), et ayant une capacité de flexibilité, et disposée entre les lèvres (5.1 - 5.2), et est susceptible de pénétrer dans l'évidement en U (2.1) du profilé (2) en assurant un maintien et un accrochage avec le talon (3.1) de la bande de caoutchouc. La largeur de cette lèvre intermédiaire (5.4) est établie pour permettre son engagement à force dans l'évidement (2.1) du profilé (2). L'élément de maintien (5) présente en bout un rabat (5.5) susceptible de venir en appui contre la face transversale (2.7) du support (2), tandis que des ailettes (5.6) latérales coulissent le long des évidements (2.6).

Ainsi, la structure support du balai peut s'engager et se fixer sans difficulté sur l'ossature de l'essuie-glace.

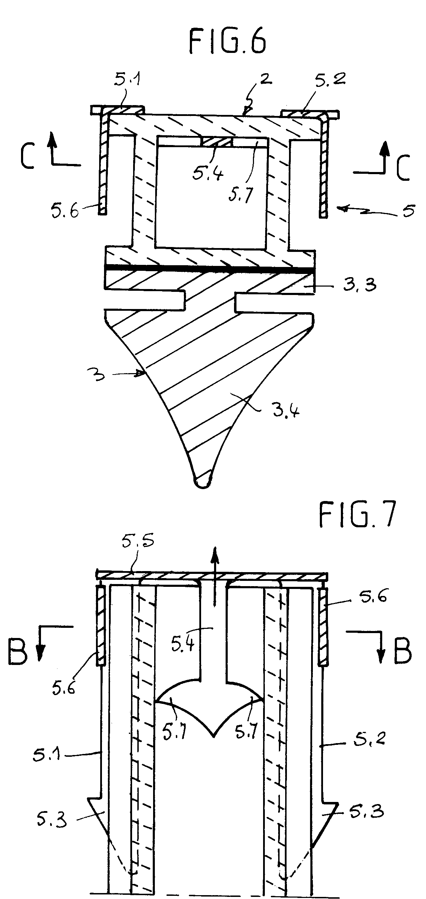

Selon la variante des figures 5 et 6, le profilé (2) et la bande de caoutchouc (3) sont réalisés monobloc par co-extrusion. Dans cette mise en oeuvre, la bande de caoutchouc ne présente pas le bourrelet supérieur (3.1) et le plan d'appui constitué par les ailettes (3.3) est solidarisé au rebord (2.4) du profilé (2), par soudure ou autre. Dans cette mise en oeuvre, le profilé (2) est en polycarbonate tandis que la bande (3) est en matériau élastomère. Dans cette réalisation particulièrement avantageuse, l'ensemble monobloc (2 - 3) est prêt à être découpé à la longueur désirée pour être ensuite fixé à l'ossature de l'essuie-glace. Ainsi qu'il apparaît à la figure 6, la lèvre intermédiaire (5.4) pénètre dans l'évidement (2.1) en étant engagée à force par suite d'un dimensionnement sensiblement supérieur à la largeur de l'évidement, les extrémités des lèvres venant en contre-appui contre les faces en regard dudit évidement.

Cet ensemble est avantageusement réalisé à une longueur standardisée adaptée à tous types de véhicules. Ainsi, en fonction de la longueur d'essuie-glace, il suffit de découper à la longueur par un outil de coupe approprié l'ensemble précité par une coupe transversale de l'élément (2) et de la bande (3).

Le montage de la structure support de l'essuie-glace selon l'invention est extrêmement aisé et son coût de fabrication très faible par rapport à l'art antérieur.

## Revendications

**-1-** Structure support pour essuie-glaces pour véhicules, caractérisé en ce qu'elle comprend un profilé (2) de grande longueur susceptible de maintenir, guider et coopérer avec une bande caoutchouc (3) de grande longueur, ledit profilé présentant un évidement intérieur (2.1) sur toute sa longueur, ledit profilé et ladite bande étant solidarisés par tout moyen approprié sur au moins une de leur extrémité, ledit ensemble obtenu étant fixé par au moins un élément de maintien et d'accrochage (5) susceptible de s'engager partiellement dans le profilé et se fixer dans l'ossature support de l'essuie-glace, ledit élément de maintien présentant une lèvre médiane (5.4) ayant une capacité de flexibilité et susceptible de s'engager à force dans ledit évidement intérieur (2.1) du profilé en constituant une zone de retenue par rapport aux faces en regard dudit évidement, et autoriser ainsi une fixation dudit élément de maintien sur ledit profilé.

**-2-** Structure support selon la revendication 1, caractérisée en ce que la liaison de la bande (3) sur le profilé (2) est obtenue par au moins un point de sertissage (4).

**-3-** Structure support selon les revendications 1 et 2, caractérisée en ce que le profilé (2) est réalisé en matériau plastique et est agencé avec une forme en U définissant un évidement intérieur (2.1) et présentant deux ailes (2.2 - 2.3) entre lesquelles est engagée à coulissement et positionnement la partie supérieure (3.1) formant bourrelet de la bande (3), cette dernière comprenant, à partir de son âme centrale (3.2), des ailettes (3.3) susceptibles de venir en appui contre les rebords des ailes (2.2 - 2.3) du profilé précité, ladite bande se prolongeant dans sa partie inférieure avec une forme triangulée évasée susceptible de s'appliquer sur le verre de pare-brise.

**-4-** Structure support selon les revendications 1 et 2, caractérisée en ce que le profilé et la bande de caoutchouc sont réalisés monobloc par co-extrusion, les parties en regard du profilé de la bande étant solidarisées entre elles par soudure, et en ce que le profilé (2) est agencé avec une forme en U définissant un évidement intérieur (2.1) et présentant deux ailes (2.2 - 2.3), ladite bande comprenant, à partir de son âme centrale (3.2), des ailettes (3.3) susceptibles de venir en appui contre les rebords des ailes (2.2 - 2.3) du profilé précité, ladite bande se prolongeant dans sa partie inférieure avec une forme triangulée évasée susceptible de s'appliquer sur le verre du pare-brise.

**-5-** Structure-support selon la revendication 4, caractérisée en ce que le profilé (2) est réalisé en polycarbonate et la bande (3) en matériau élastomère.

**-6-** Structure support selon l'une quelconque des revendication 1 à 5, caractérisée en ce que la partie supérieure (2.5) du profilé (2) est agencée avec deux évidements longitudinaux (2.6), et en ce que l'élément de maintien et d'accrochage (5) présente deux lèvres (5.1 - 5.2) parallèles disposées le long des bordures longitudinales de l'élément, lesdites lèvres formant crochets à leur extrémité (5.3) en étant flexibles pour s'engager dans l'ossature support de l'essuie-glace, ledit élément (5) présentant une lèvre (5.4) médiane flexible et formant crochet à son extrémité (5.7) susceptible de s'engager à force dans l'évidement (2.1) du profilé (2).

**-7-** Structure support selon la revendication 6, caractérisée en ce que l'élément de maintien (5) présente un rabat (5.5) venant en appui contre la face transversale (2.7) du support et comprend des ailettes (5.6) latérales coulissant le long des évidements longitudinaux (2.6).

**-8-** Structure support selon l'une quelconque des revendications 1 à 7, caractérisée en ce qu'elle est réalisée avec des composants profilé (2) et bande (3) réalisés en un ou des matériaux susceptibles d'être découpés transversalement à toute longueur désirable en fonction des caractéristiques dimensionnelles des balais d'essuie-glaces sur lesquels ils sont adaptés.
